# EUROPÄISCHE PATENTSCHRIFT

(11) **EP 0 911 142 B1**
(45) Veröffentlichungstag und Bekanntmachung des Hinweises auf die Patenterteilung: **03.08.2005**
(21) Anmeldenummer: 98117450.1
(22) Anmeldetag: 15.09.1998
(51) Int. Cl.: B29C 67/04, B29C 67/00

(54) **Verwendung eines Polyamids 12 für selektives Laser-Sintern und Polyamid 12 Pulver**
Use of a polyamide 12 for selective laser sintering and polyamide 12 powder
Utilisation d'un polyamide 12 pour frittage laser selectif et poudre de polyamide 12

(30) Priorität: 27.10.1997 DE 19747309
(43) Veröffentlichungstag der Anmeldung: 28.04.1999
(73) Patentinhaber: Degussa AG, 40474 Düsseldorf (DE)
(72) Erfinder: Scholten, Heinz, 45721 Haltern (DE); Christoph, Wolfgang, 45768 Marl (DE)

(56) Entgegenhaltungen:
- WO-A-96/06881
- DE-A- 4 421 454
- DE-B- 2 906 647
- US-A- 5 304 329
- US-A- 5 342 919
- US-A- 5 648 450
- SCHMACHTENBERG E ET AL: "LASERSINTERN VON POLYAMID. LASER-SINTERING OF POLYAMIDE" KUNSTSTOFFE, Bd. 87, Nr. 6, Juni 1997, Seite 773/774, 776 XP000656866
- DATABASE WPI Section Ch, Week 9215 Derwent Publications Ltd., London, GB; Class A23, AN 92-121077 XP002092007 & JP 04 067912 A (NIPPON PETROCHEMICALS CO LTD), 3. März 1992
- GIANNA COJAZZI ET AL: "Phase transitions in Nylons 8, 10 and 12 crystallised from solutions" MAKROMOLEKULARE CHEMIE, MACROMOLECULAR CHEMISTRY AND PHYSICS., Bd. 192, Nr. 1, - Januar 1991 Seiten 185-190, XP002092006 BASEL CH
- CHEMICAL ABSTRACTS, Columbus, Ohio, US, Seite , Spalte , Zusammenfassung 94:66289, G. GOGOLEWSKI ET AL: "Effect of annealing on thermal properties and crystal structure of polyamides. Nylon 12 (polylaurolactam)"

## Beschreibung

Die Erfindung betrifft ein Verfahren zur Herstellung von Formkörpern durch selektives Laser-Sintern von pulverförmigen Materialien, bei dem man ein Polyamid 12 (Polylaurinlactam; PA 12) mit bestimmten physikalischen Parametern als pulverförmiges Material verwendet, sowie das pulver förmige Polyamid 12.

Bei der Entwicklung von Maschinen und Apparaten spielt die Herstellung von Mustern, Modellen und Prototypen eine wichtige, die Entwicklungszeit mitbestimmende Rolle. Die Herstellung solcher Formteile ist jedoch ihrerseits zeitaufwendig und beeinflußt daher ebenfalls die Entwicklungszeit. In neuerer Zeit ist unter der Bezeichnung selektives Laser-Sintern (oder Rapid Prototyping) ein Verfahren bekanntgeworden, das eine schnelle und kostengünstige Fertigung solcher Formteile aus einem pulverförmigen Material, in der Regel einem Polymerpulver gestattet. Das Verfahren schließt an das Computer-unterstützte Entwerfen (CAD: computer-aided design) an, welches ein Schichtbild des gewünschten Formteil in digitalisierter Form liefert.

Zur Herstellung des Formteils wird das Polymerpulver in dünner Schicht auf einen absenkbaren Teller einer Sinterkammer aufgebracht, die auf eine Temperatur wenig unterhalb des Schmelzpunkts des Polymers erhitzt wurde. Die Schichtdicke wird so gewählt, daß nach dem folgenden Laser-Sintern eine Schmelzschicht entsteht. Der Laser sintert nach den Vorgaben des Rechners die Pulverteilchen zusammen. Denach wird der Teller um den Betrag der Schichtdicke üblicherweise 0.2 bis 2 mm, abgesenkt. Mit dem Aufbringen einer neuen Pulverschicht wiederholt sich der Vorgang. Nach Ablauf der vorgewählten Anzahl von Zyklen entsprechend der vorgesehenen Zahl von Schichten ist ein Block entstanden, der äußerlich aus Pulver besteht. In seinem Inneren beherbergt er eine hochviskose Schmelze in der Form des gewünschten Formteils. Nicht aufgeschmolzene Bereiche, in denen das Pulver noch in fester Form vorliegt, stabilisieren die Form der Schmelze.

Danach wird der Block, bestehend aus Pulverhülle und Schmelze, langsam abgekühlt, und die Schmelze erstarrt bei Unterschreitung der Erstarrungstemperatur des Polymeren. Dabei ist es von Vorteil, wenn der Block so lange bei der Erstarrungstemperatur gehalten wird, bis die Phasenumwandlung abgeschlossen ist. Dies wird erreicht, indem im Temperaturbereich der Phasenumwandlung eine geringe Abkühlrate gewählt wird, so dass die freiwerdende Erstarrungswärme den Formkörper im Inneren des Blocks bis zum Abschluss der Phasenumwandlung exakt auf der Erstarrungstemperatur hält. Nach Abkühlen wird der Block aus der Sinterkammer genommen und der Formkörper vom ungesinterten Polymerpulver getrennt. Das Pulver kann wieder für den Prozess eingesetzt werden.

In US-A-5 304 329 wird ein Verfahren zur Wiederverwendung von zum Laser-Sintern geeigneten Materialien beschrieben. Bei diesem Verfahren wird versucht, Laser-Sinter-Pulver, welche während des Sinterprozesses in der Nähe des gesinterten Objekts angeordnet war, am Zusammensintern, -schmelzen oder ―kleben durch die Verwendung eines Kühlgases zu verhindern. Das Kühlgas soll die Temperatur in den Bereichen, in denen das Sinterpulver nicht zusammensintern soll, auf eine Temperatur unterhalb der Erweichungstemperatur des verwendeten Sinterpulvers halten. Durch dieses Verfahren, welches relativ aufwendig ist, kann erreicht werden, dass das Pulver, welches nicht zur Herstellung des Objekts durch Sintern benötigt wurde, fliess- bzw. rieselfähig bleibt und damit wieder verwendet werden kann.

Das am häufigsten eingesetzte pulverförmige Polymer ist Polyamid 11 (PA 11); andere verwendete Polymere sind Polyamid 6, Polyacetale, Polypropylen, Polyethylen und Ionomere. Auch Polycarbonate und Polystyrol sind bereits verwendet worden. Neben ihrer chemischen Natur sind auch physikalische Parameter mitbestimmend für die Eignung der Polymerpulver. In WO-A-9606881 wird ein für das Laser-Sintern geeignetes Polymerpulver beschrieben, das bei der Bestimmung des Schmelzverhaltens durch Differentialscanningkalorimetrie (DSC) bei einer Scanning-Rate von 10 bis 20 °C/min keine Überlappung des Schmelzpeaks und des Erstarrungspeaks zeigt, einen ebenfalls durch DSC bestimmten Kristallinitätsgrad von 10 bis 90 % aufweist, ein zahlendurchschnittliches Molekulargewicht Mn von 30.000 bis 500.000 hat und dessen Quotient Mw/Mn im Bereich von 1 bis 5 liegt. Nach WO-A-9604335 wird dieses Pulver zusammen mit einem verstärkenden Pulver verwendet, dessen Schmelzpunkt erheblich höher liegt als der des Polymers, z.B. mit Glaspulver.

In US-A-5 342 919 werden Laser-sinterbare Pulver beschrieben, die bestimmte Eigenschaften aufweisen. Insbesondere werden Pulver, die für das Laser-Sintern eingesetzt werden können, beschrieben, die eine als Laser-Sinter-Fenster beschriebene Temperaturdifferenz, berechnet als Differenz von Schmelztemperatur und Erstarrungstemperatur, von 2 bis 25 °C, vorzugsweise von 5 bis 20 °C aufweisen. Zu diesen Pulvern zählen auch Nylon (Polyamid) 6, 11 und 12.

Die Prozessparameter für das Laser-Sintern von Polyamiden gemäß dem Oberbegriff des Anspruchs 1 sind bekannt aus Kunststoffe, Band 87, Nummer 6, Seiten 773 bis 776, 1997 Es wurde festgestellt, dass die Eignung von Polymeren für das Laser-Sintern im wesentlichen von ihrer spezifischen Wärmekapazität und ihrer Viskosität im Schmelztemperaturbereich abhängig ist. Als besonders vorteilhaft geben Schmachtenberg et al. darin die Verwendung von Materialien an, die einen kleinen Schmelztemperaturbereich (Differenz zwischen Schmelz- und Rekristallisationstemperatur) aufweisen.

Es wurde gefunden, dass die Anforderung an ein optimales Polymer für das Laser-Sintern sind:
- Möglichst hohe Differenz zwischen Schmelztemperatur und Erstarrungstemperatur. Da die Erstarrungstemperatur bei reinen Polymerpulvern durch die physikalischen Grunddaten festgelegt ist, bedeutet die Schmelzpunkterhöhung durch Bildung einer neuen Kristallmodifikation einen großen Vorteil. Je größer die Differenz, um so geringer ist der Schwund beim Erstarren und um so genauer trifft man die gewünschten Maße des Formkörpers. Eine Senkung der Erstarrungstemperatur durch Additive oder Comonomere geht in der Regel zu Lasten der mechanischen Endeigenschaften.
- Möglichst hohe Schmelzenthalpie. Dadurch wird verhindert, dass Pulverteilchen, die sich in Nachbarschaft zu vom Laserstrahl getroffenen Teilchen befinden, durch nicht zu verhindernde Wärmeleitung angeschmolzen werden und damit außerhalb des gewünschten Bereichs ein Sintern stattfindet.

Gemäß Anspruch 1 wurde ein Verfahren zur Herstellung von Formhörpern durch selektives Laser-Sintern von pulverförmigem Polyamid 12 mit

| | |
|---|---|
| einer Schmelztemperatur | <von> 185 - 189 °C ,einer |
| Schmelzenthalpie | von112 ± 17 J/g ,und einer |
| Erstarrungstemperatur | von 138 - 143 °C gefunder |

Gemäß Anspruch 3 weist das Palver eine mittlere Teichengröße von 50 bis 150 µm

Ein bevorzugtes Polyamid 12 gemäß Anspruch 2 weist die folgenden Parameter auf:

| | |
|---|---|
| Schmelztemperatur | 186 - 188 °C |
| Schmelzenthalpie | 100 - 125 J/g |
| Erstarrungstemperatur | 140 - 142 °C |

Die verschiedenen Parameter wurden mittels DSC nach DIN 53 765, AN-SAA 0663 bestimmt. Die Messungen wurden mit einem Perkin Elmer DSC 7 mit Stickstoff als Spülgas und einer Aufheizrate sowie Abkühlrate von jeweils 20 K/min durchgeführt. Der Temperaturmessbereich betrug -30 °C bis +210 °C.

Ein Polyamid 12 mit den genannten Parametern wird bereits in Chemical Abstract 94:66289 beschrieben. In diesem Dokument wird ein Polyamid 12 mit einer Schmelztemperatur von 187 °C und einer Schmelzwärme von 23 cal/g (96,2964 J/g) beschrieben.

Die erfindungsgemäße Verwendung des speziellen PA 12-Pulvers für das Laser-Sintern ist mit Vorteilen verbunden, welche Pulver nach dem Stand der Technik nicht oder nur in geringem Maße aufweisen. Dies gilt überraschenderweise auch für das übliche PA 12 sowie für das weithin als Pulver für selektives Laser-Sintern verwendete PA 11. Für diese Polyamide sowie für erfindungsgemäße PA 12-Typen wurden die folgenden, für das Laser-Sintern relevanten Daten gemessen:

| Polyamid | Schmelztemperatur | Schmelzenthalpie | Erstarrungstemperatur |
|---|---|---|---|
| PA 12¹ | 187±1 °C | 112±17 J/g | 141±1 °C |
| PA 12² | 177±1 °C | 71±11 J/g | 141±1 °C |
| PA 12³ | 176±1 °C | 109±16 J/g | 143±1 °C |
| PA 11⁴ | 186±1 °C | 87±13 J/g | 157±1 °C |

| | | | |
|---|---|---|---|
| ¹ erfindungsgemäßes PA 12 | | | |
| ² VESTAMID^{(R)} der Hüls AG (hydrolytisch polymerisiert) | | | |
| ³ ORGASOL^{(R)} der Elf Atochem S.A. (lösungspolymerisiert) | | | |
| ⁴ RILSAN^{(R)} der Elf Atochem S.A. (hydrolytisch polymerisiert) | | | |

Die Tabelle zeigt, daß das erfindungsgemäße PA 12 die günstigste Kombination aus (möglichst großer) Differenz von Schmelz- und Erstarrungstemperatur sowie (möglichst großer) Schmelzenthalpie zeigt. Daher kann die Temperatur in der Sinterkammer höher gehalten werden als bei den handelsüblichen Polyamiden. Im Ergebnis ist der Schwund beim Erstarren (Curl) niedriger und die Maßhaltigkeit der Formkörpen höher als bei Verwendung dieser anderen Polyamide.

Formkörper aus dem erfindungsgemäß verwendeten Pulver haben eine so gute Oberfläche, daß sie für viele Zweck keiner Nachbehandlung bedürfen. Zudem ist die Maßhaltigkeit der Formkörper besser als sie von Formkörpern aus anderen Polyamiden. Wegen des verhältnismäßig scharfen Schmelzpeaks kann die Temperatur in der Form unschwer kurz unterhalb der Schmelztemperatur gehalten werden. Man muß also nicht unnötig viel Energie über den Laser einbringen und braucht trotzcem nicht zu befürchten, daß Teilchen in den nicht vom Laserstrahl überstrichenen Zonen zusammenbacken. Das Pulver in diesen Zonen eigret sich aus diesem Grunde besser zur Wiederverwendung als Pulver aus üblichem PA 12 oder aus PA 11. Nach dem Schmelzen des erfindungsgemäß zu verwendenden PA 12-Pulvers ist das flüssige Produkt wegen des höheren Schmelzpunktes deutlich niedrigerviskos als eine Schmelze aus üblichem PA 12 mit einer Temperatur, die entsprechend über dessen Schmelztemperatur liegt. Die Formkörper weisen vergleichsweise wenige Poren auf, was sich dadurch bemerkbar macht, daß ihre Dichte nur wenig unter der Dichte konventionell (d.h. durch Spritzguß. Extrudieren usw.) hergestellten Formkörper liegt. Entsprechend hoch ist die Festigkeit der Formkörper. PA 12 besitzt eine sehr große Zähigkeit, so daß die Formkörper hoch belastbar sind. Weiterhin ist die Wasseraufnahme von PA 12 sehr gering, so daß die Formkörper nicht zum Quellen neigen, wenn sie mit Wasser in Berührung kommen.

Das in dem Verfahren nach der Erfindung verwendete PA 12-Pulver ist an sich bekannt aus chemical Abstract 94:66289. Das PA 12-Pulver kann nach dem Verfahren der DE-B-2906647 hergestellt werden. Dabei löst man PA 12 in Ethanol und läßt es unter bestimmten Bedingungen auskristallisieren, wodurch ein Pulver mit Teilchengrößen im µm-Bereich erhalten wird.

Hinsichtlich der übrigen Stoffparameter des PA 12 sowie der Verfahrensbedingungen des selektiven Laser-Sinterns weist das erfindungsgemäße Verfahren keine Besonderheiten auf. Die mittlere Teilchengroße und die Teilchengrößenverteilung bestimmen u.a. die Oberflächentoleranzen, die stets größer sind als der mittlere Teilchendurchmesser. Die PA 12-Pulver haben im allgemeinen mittlere Teilchengrößen von 50 bis 150 µm. Gegebenenfalls werden die Teilchen des wie zuvor beschrieben erhaltenen PA 12 durch Mahlen weiter zerkleinert und bedarfsgerecht klassiert.

Die Verfahrensparameter, wie Schichtdicke, Temperatur in der Form. Stärke der Laserstrahlung, Abstand der Schicht von der Strahlungsquelle, Bestrahlungszeit und Zyklusfrequenz, lassen sich für einen gegebenen Formkörper durch orientierende Versuche unschwer ermitteln.

## Patentansprüche

1. Verfahren zur Herstellung von Formkörpern durch selektives Laser-Sintern von pulverförmigem Polyamid 12 mit einer Erstarrungstemperatur von 138 bis 143°C
**dadurch gekennzeichnet,**
**dass** das Polyamid 12 eine
| | |
|---|---|
| Schmelztemperatur | von 185 bis 189 °C und eine |
| Schmelzenthalpie | 112 ± 17 J/g aufweist |

2. Verfahren nach Anspruch 1,
**dadurch gekennzeichnet,**
**dass** das Polyamid 12 eine
| | |
|---|---|
| Schmelztemperatur | von 186 bis 188 °C , eine |
| Schmelzenthalpie | von 100 bis 125 J/g , und eine |
| Erstarrungstemperatur | von 140 bis 142 °C |
aufweist.

3. Pulverförmiges Polyamid 12, das eine Schmelztemperatur von 185 bis 189 °C, eine Schmelzenthalpievon 112 ± 17 J/g und eine Erstarrungstemperatur von 138 bis 143 °C aufweist, geeignet zur Herstellung von Formkörpern durch selektives Laser-Sintern,
**dadurch gekennzeichnet,**
**dass** das Pulver eine mittlere Teilchengröße von 50 bis 150 µm aufweist.

## Claims

1. A process for producing shaped articles by selective laser sintering of pulverulent nylon-12 having a solidification point of from 138 to 143°C, **characterized in that** the nylon-12 has a melting point of from 185 to 189°C and an enthalpy of fusion of 112 ± 17 J/g.

2. A process according to claim 1, **characterized in that** the nylon-12 has a melting point of from 186 to 188°C, an enthalpy of fusion of from 100 to 125 J/g and a solidification point of from 140 to 142°C.

3. A pulverulent nylon-12 which has a melting point of from 185 to 189°C, an enthalpy of fusion of 112 ± 17 J/g and a solidification point of from 138 to 143°C, suitable for producing moldings by selective laser sintering,
**characterized in that** the powder has an average particle size of from 50 to 150µm.

## Revendications

1. °) Procédé de production de solides moulés par frittage sélectif au laser, de polyamide (12) pulvérulent ayant une température de solidification de 138 à 143°C,
**caractérisé en ce que**
le polyamide (12) possède une température de fusion de 185 à 189°C et une enthalpie de fusion de 112 ± 17 J/g.

2. Procédé selon la revendication 1,
**caractérisé en ce que**
le polyamide (12) possède une température de fusion allant de 186 à 188°C, une enthalpie de fusion allant de 100 à 125 J/g et une température de solidification allant de 140 à 142°C.

3. Polyamide (12) pulvérulent qui possède une température de fusion de 185 à 189°C, une enthalpie de fusion de 112 ± 17 J/g et une température de solidification de 138 à 143°C, approprié pour la production de solides moulés par frittage sélectif au laser,
**caractérisé en ce que**
la poudre possède une taille moyenne de particules de 50 à 150 µm.
